# EUROPÄISCHE PATENTSCHRIFT

(11) **EP 1 758 791 B1**
(45) Veröffentlichungstag und Bekanntmachung des Hinweises auf die Patenterteilung: **15.08.2007**
(21) Anmeldenummer: 06776080.1
(22) Anmeldetag: 26.06.2006
(51) Int. Cl.: B65B 9/12, B65B 51/04, A22C 11/00

(54) **VORRICHTUNG ZUM UNTERTEILEN EINES VERPACKUNGSSCHLAUCHS IN VERPACKUNGSEINHEITEN**
DEVICE FOR SUB-DIVIDING TUBULAR PACKAGING INTO PACKAGING UNITS
DISPOSITIF POUR SUBDIVISER UN BOYAU DE CONDITIONNEMENT EN UNITES DE CONDITIONNEMENT

(30) Priorität: 27.06.2005 DE 202005010152 U
(43) Veröffentlichungstag der Anmeldung: 07.03.2007
(73) Patentinhaber: Tipper Tie technopack GmbH, 21509 Glinde (DE)
(72) Erfinder: KRUSE, Holger, 22145 Hamburg (DE)
(74) Vertreter: Glawe, Delfs, Moll
(86) Internationale Anmeldenummer: PCT/EP2006/006152
(87) Internationale Veröffentlichungsnummer: WO 2007/000301

(56) Entgegenhaltungen:
- DE-A1- 2 550 042
- DE-A1- 4 403 946
- GB-A- 2 100 110
- NL-A- 7 104 959

## Beschreibung

Die Erfindung betrifft eine Vorrichtung zum Unterteilen eines zugeführten Verpackungsschlauchs in Verpackungseinheiten. Sie umfasst zwei zum Einschnüren des Verpackungsschlauchs bestimmte Verdrängergruppen, wobei die in Bezug auf die Bewegung des Verpackungsschlauchs hintere Verdrängergruppe in Längsrichtung des Schlauchs bewegbar ist.

Vorrichtungen dieser Art kommen insbesondere bei der Wurstproduktion zum Einsatz, wo Füllmaschinen einen Verpackungsschlauch mit einem Füllgut befüllen. Um den gefüllten Schlauch in Verpackungseinheiten zu unterteilen, umfassen die Verdrängergruppen den gefüllten Schlauch und schnüren ihn ein. Durch das Einschnüren wird das Füllgut im Bereich der Verdränger aus dem Schlauch heraus gedrückt.

Während des Einschnürens sind die beiden Verdrängergruppen in Längsrichtung betrachtet unmittelbar hintereinander angeordnet. Nach dem Einschnüren wird die hintere Verdrängergruppe in einer Spreizbewegung von der vorderen Verdrängergruppe weg bewegt, so dass ein füllgutfreier Abschnitt zwischen den beiden Verdrängergruppen entsteht. In dem füllgutfreien Abschnitt können Verschlussklammern angebracht werden, um die Verpackungseinheiten dauerhaft zu verschließen.

Der aus der hinteren Verdrängergruppe austretende Verpackungsschlauch wird an eine Einrichtung zum Abtransportieren, häufig ein Laufband übergeleitet. Da die hintere Verdrängergruppe sich bei der Spreizbewegung in Längsrichtung bewegt, kann der Verpackungsschlauch nicht ohne weiteres an eine stationär angeordnete Abtransporteinrichtung übergeleitet werden.

Bereits bekannt ist es, ein Laufband so zu lagern, dass es in seiner Gesamtheit in Längsrichtung bewegt werden kann. Beim Betrieb der Vorrichtung wird das gesamte Laufband hin und her bewegt, so dass es sich in einem Gleichtakt mit der Bewegung der hinteren Verdrängergruppe befindet. Auf diese Weise wird der Abstand zwischen der hinteren Verdrängergruppe und dem Laufband konstant gehalten und ein sicheres Überleiten des Verpackungsschlauchs von der hinteren Verdrängergruppe auf das Laufband sichergestellt. Ein Nachteil dieser Lösung besteht darin, dass die Arbeitsgeschwindigkeit der Vorrichtung wegen der großen zu bewegenden Masse begrenzt ist.

Alternativ wird das Laufband teleskopartig ausgebildet. Das verdrängernahe Ende des Laufbands kann relativ zum verdrängerfernen Ende bewegt werden, so dass sich die Länge des Laufbands verändert. Es bewegt sich also nicht das gesamte Laufband, sondern nur das verdrängerseitige Ende des Laufbands im Gleichtakt mit der hinteren Verdrängergruppe. Dies ist mechanisch aufwändig.

Der Erfindung liegt die Aufgabe zu Grunde, eine Vorrichtung gemäß dem Oberbegriff des Anspruchs 1 vorzustellen, die einfach aufgebaut ist und einen sicheren Abtransport des Verpackungsschlauchs ermöglicht. Die Aufgabe wird gelöst durch die Merkmale des Anspruchs 1. Vorteilhafte Ausführungsformen finden sich in den Unteransprüchen.

Erfindungsgemäß umfasst die Vorrichtung ein mit der hinteren Verdrängergruppe verbundenes Stützelement. Das Stützelement vollzieht die Bewegung der hinteren Verdrängergruppe mit. Der an der hinteren Verdrängergruppe austretende Verpackungsschlauch liegt auf dem Stützelement auf. Durch das Stützelement wird sichergestellt, dass der Verpackungsschlauch nach seinem Austreten aus der hinteren Verdrängergruppe bereits sicher geführt wird, bevor er auf die Abtransporteinrichtung übergeleitet wurde.

Da der Verpackungsschlauchs nach dem Austreten aus der hinteren Verdrängergruppe durch das Stützelement geführt wird, kann ein sich ändernder Abstand zwischen der Abtransporteinrichtung und der hinteren Verdrängergruppe zugelassen werden. Dadurch wird es möglich, die Abtransporteinrichtung in einer festen Position anzuordnen. Der sich während der Bewegung der hinteren Verdrängergruppe ändernde Abstand wird durch das Stützelement überbrückt.

Das Stützelement dient dazu, den Verpackungsschlauch gegenüber der Schwerkraft abzustützen. Die Angaben hoch, tief, oben, unten, waagerecht werden deswegen relativ zur Richtung der Schwerkraft verwendet.

Die Erfindung kann unabhängig von der konkreten Ausgestaltung der Verdränger zum Einsatz kommen. Eine Verdrängergruppe kann sich aus linear bewegten Verdrängern zusammensetzen, ebenso können die Verdränger für eine Schwenkbewegung ausgelegt sein. Eine Verdrängergruppe kann zwei oder mehr Verdränger umfassen.

Beim Unterteilen in Verpackungseinheiten wird der Verpackungsschlauch relativ zum Stützelement bewegt. Um die Relativbewegung zwischen dem Stützelement und dem Verpackungsschlauch zu erleichtern, kann das Stützelement mit Rollen ausgestattet sein. Um die Rollen entsprechend der Bewegungsrichtung auszurichten, sind die Achsen der Rollen vorzugsweise waagerecht und quer zur Längsrichtung des Verpackungsschlauchs angeordnet.

Bei der Spreizbewegung bewegt sich die hintere Verdrängergruppe über eine gewisse Strecke in Längsrichtung. Der zwischen der hinteren Verdrängergruppe und einer in fester Position angeordneten Abtransporteinrichtung zu überbrückende Abstand ist mindestens so groß wie die Bewegungsstrecke der hinteren Verdrängergruppe. Das Stützelement hat deswegen zweckmäßigerweise eine mindestens der Bewegungsstrecke entsprechende Längserstreckung.

Die Verdränger der beiden Verdrängergruppen vollführen außer der Spreizbewegung in Längsrichtung auch eine senkrecht zur Längsrichtung liegende Einschnürbewegung. Das Stützelement soll sich nur in Längsrichtung bewegen. Das Stützelement ist aus diesem Grund vorzugsweise mit einem sich ausschließlich in Längsrichtung bewegenden Tragekörper der hinteren Verdrängergruppe und nicht mit den Verdrängern selbst verbunden.

Das verdrängerferne Ende des Stützelements kann tiefer angeordnet sein als das verdrängernahe Ende des Stützelements. Auf diese Weise unterstützt die Schwerkraft die Bewegung des Verpackungsschlauchs in Längsrichtung. In einer vorteilhaften Ausführungsform ist die Neigung des Stützelements, also der Höhenunterschied zwischen dem verdrängernahen Ende und dem verdrängerfernen Ende, verstellbar.

Um ein Anpassen des Stützelements an verschiedene Arten von Verpackungsschläuchen zu ermöglichen, kann das Stützelement höhenverstellbar mit der hinteren Verdrängergruppe verbunden sein.

Der Verpackungsschlauch liegt in einer Stützebene auf dem Stützelement auf. Um eine sichere Seitenführung des Verpackungsschlauchs auf dem Stützelement zu gewährleisten, kann das Stützelement mit seitlichen Begrenzungsflächen ausgestattet sein, die sich nach oben über die Stützebene hinaus erstrecken.

Die erfindungsgemäße Vorrichtung kann mit einer separaten Einrichtung zum Abtransportieren zusammenwirken. Um eine exakte Abstimmung der Komponenten zu ermöglichen, ist die Abtransporteinrichtung jedoch vorzugsweise Bestandteil der Vorrichtung. Das Stützelement kann dann so eingerichtet sein, dass sein verdrängerfernes Ende während der gesamten Spreizbewegung der hinteren Verdrängergruppe oberhalb der vorteilhafterweise als Laufband ausgestalteten Abtransporteinrichtung angeordnet ist. Gemäß einer alternativen Ausführungsform der Erfindung, kann das Stützelement selbst die Funktion der Abtransporteinrichtung übernehmen, so dass auf eine separate Abtransporteinrichtung (z.B. ein Laufband) verzichtet werden kann.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine schematische Darstellung einer erfindungsgemäßen Vorrichtung;
- Fig. 2:: eine Draufsicht auf ein erfindungsgemäßes Stützelement; und
- Fig. 3:: einen Schnitt durch das Stützelement auf Fig. 2.

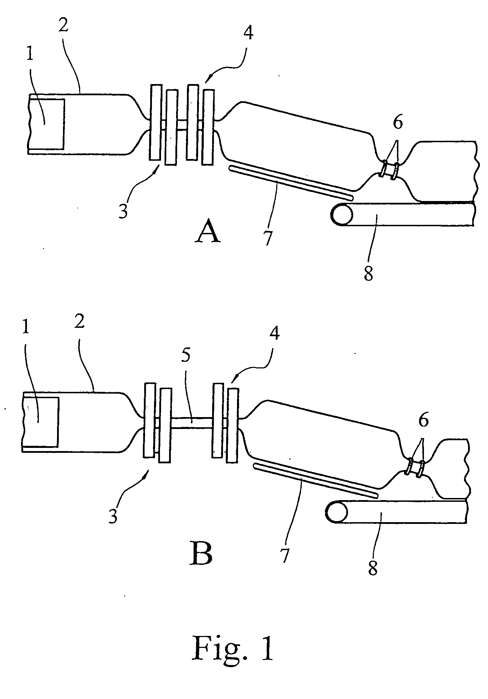

Durch ein Füllrohr 1 einer nicht dargestellten Füllmaschine wird in Fig. 1 ein Verpackungsschlauch 2 mit einem Füllgut gefüllt. Parallel zum Austritt des Füllgutes aus dem Füllrohr 1 wird ein passendes Stück des Schlauches 2 vom Außenumfang des Füllrohrs 1 abgezogen.

Der mit Füllgut gefüllte Verpackungsschlauch 2 wird in Phase A von zwei Gruppen 3, 4 von Verdrängern eingeschnürt. Zum Erzeugen eines füllgutfreien Abschnitts 5 des Verpackungsschlauchs 2 wird in Phase B die in Bewegungsrichtung des Verpackungsschlauchs 2 hintere Verdrängergruppe 4 in einer Spreizbewegung von der vorderen Verdrängergruppe 3 weg bewegt. Im füllgutfreien Abschnitt 5 können Verschlussklammern 6 angebracht werden, die einzelne Verpackungseinheiten des Schlauches 2 dauerhaft verschließen.

Mit der hinteren Verdrängergruppe 4 ist ein Stützelement 7 verbunden, das zusammen mit der hinteren Verdrängergruppe 4 die Spreizbewegung vollzieht. Der aus der hinteren Verdrängergruppe 4 austretende Verpackungsschlauch 2 liegt auf dem Stützelement 7 auf und wird von dem Stützelement 7 auf eine als Laufband 8 ausgebildete Abtransporteinrichtung übergeleitet.

Das Laufband 8 ist so positioniert, dass das verdrängerferne Ende des Stützelements 7 sich während der gesamten Spreizbewegung oberhalb des Laufbands befindet. Die Längserstreckung des Stützelements 7 ist zu diesem Zweck größer als die Strecke, die das Stützelement 7 während der Spreizbewegung zurücklegt. Das verdrängerferne Ende des Stützelements 7 ist tiefer angeordnet als das verdrängernahe Ende des Stützelements 7, so dass die Bewegung des Verpackungsschlauchs 2 entlang dem Stützelement 7 durch die Schwerkraft unterstützt wird.

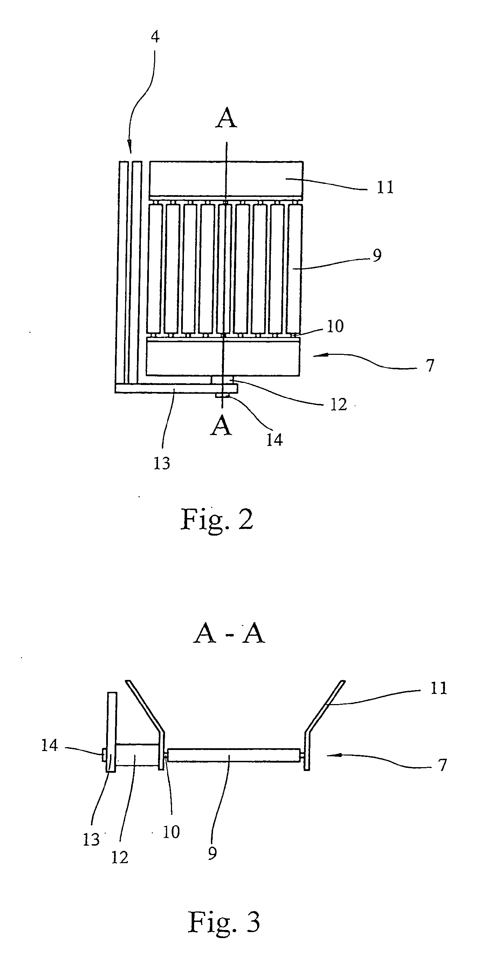

Das Stützelement 7 umfasst in Fig. 2, 3 eine Mehrzahl von Rollen 9, deren Achsen 10 waagerecht und quer zur Längsrichtung angeordnet sind. Bei seiner Bewegung entlang dem Stützelement 7 rollt der Verpackungsschlauch 2 auf den Rollen 9. An die Rollen 9 grenzen seitliche Begrenzungsflächen 11 an. Die Begrenzungsflächen 11 verhindern, dass der Verpackungsschlauch 2 das Stützelement 7 zur Seite hin verlassen kann.

Das Stützelement 7 ist über einen Zwischenträger 12 mit einem Tragekörper 13 der hinteren Verdrängergruppe 4 verbunden. Über ein nicht dargestelltes Langloch im Tragekörper 13 kann das Stützelement 7 nach oben oder unten verschoben werden. Durch Drehen um die Achse der Schraube 14 kann die Neigung des Stützelements 7 verändert werden.

Die erfindungsgemäß mit dem Stützelement 7 ausgestattete Vorrichtung erleichtert den Transport des Verpackungsschlauchs 2 von den Verdrängern 3, 4 auf das Laufband 8. Unmittelbar nach seinem Austreten aus der hinteren Verdrängergruppe 3 liegt der Verpackungsschlauch 2 auf dem Stützelement 7 auf. Das verdrängerferne Ende des Stützelements 7 ist oberhalb des Laufbands 8 angeordnet, so dass der Verpackungsschlauch 2 leicht auf das Laufband 8 übergeleitet werden kann.

## Patentansprüche

1. Vorrichtung zum Unterteilen eines zugeführten Verpackungsschlauchs (2) in Verpackungseinheiten mit zwei zum Einschnüren des Verpackungsschlauchs (2) bestimmten Verdrängergruppen (3, 4), wobei die in Bezug auf die Bewegung des Verpackungsschlauchs (2) hintere Verdrängergruppe (4) in Längsrichtung des Verpackungsschlauchs (2) bewegbar ist, **dadurch gekennzeichnet, dass** sie ein mit der hinteren Verdrängergruppe (4) verbundenes Stützelement (7) zum Abstützen des Verpackungsschlauchs (2) umfasst.

2. Vorrichtung nach Anspruch 1, **dadurch gekennzeichnet, dass** das Stützelement (7) mit Rollen (9) ausgestattet ist.

3. Vorrichtung nach Anspruch 2, **dadurch gekennzeichnet, dass** die Achsen (10) der Rollen (9) waagerecht und quer zur Längsrichtung angeordnet sind.

4. Vorrichtung nach einem der Ansprüche 1 bis 3, **dadurch gekennzeichnet, dass** das Stützelement (7) in Längsrichtung eine mindestens der Bewegungsstrecke der hinteren Verdrängergruppe (4) entsprechende Länge hat.

5. Vorrichtung nach einem der Ansprüche 1 bis 4, **dadurch gekennzeichnet, dass** das Stützelement (7) mit einem Tragekörper (13) der hinteren Verdrängergruppe (4) verbunden ist.

6. Vorrichtung nach einem der Ansprüche 1 bis 5, **dadurch gekennzeichnet, dass** das verdrängerferne Ende des Stützelements (7) tiefer angeordnet ist als das verdrängernahe Ende des Stützelements (7).

7. Vorrichtung nach einem der Ansprüche 1 bis 6, **dadurch gekennzeichnet, dass** die Neigung des Stützelements (7) verstellbar ist.

8. Vorrichtung nach einem der Ansprüche 1 bis 7, **dadurch gekennzeichnet, dass** das Stützelement (7) höhenverstellbar mit der hinteren Verdrängergruppe (4) verbunden ist.

9. Vorrichtung nach einem der Ansprüche 1 bis 8, **dadurch gekennzeichnet, dass** das Stützelement (7) durch Seitenflächen (11) begrenzt ist.

10. Vorrichtung nach einem der Ansprüche 1 bis 9, **dadurch gekennzeichnet, dass** sie eine Einrichtung (8) zum Abtransportieren des Verpackungsschlauchs (2) umfasst.

11. Vorrichtung nach Anspruch 10, **dadurch gekennzeichnet, dass** das verdrängerferne Ende des Stützelements (7) oberhalb der Einrichtung (8) zum Abtransportieren angeordnet ist.

12. Vorrichtung nach Anspruch 10 oder 11, **dadurch gekennzeichnet, dass** die Einrichtung zum Abtransportieren ein Laufband (8) ist.

13. Vorrichtung nach Anspruch 10, **dadurch gekennzeichnet, dass** das Stützelement (7) als Einrichtung zum Abtransportieren des Verpackungsschlauchs (2) ausgebildet ist.

## Claims

1. Apparatus for subdividing a fed tubular packaging sleeve (2) into packaging units, having two displacer groups (3, 4) which are intended for constricting the tubular packaging sleeve (2), it being possible for the rear displacer group (4), as seen in respect of the movement of the tubular packaging sleeve (2), to be moved in the longitudinal direction of the tubular packaging sleeve (2), **characterized in that** it comprises a supporting element (7) which is connected to the rear displacer group (4) and is intended for supporting the tubular packaging sleeve (2).

2. Apparatus according to Claim 1, **characterized in that** the supporting element (7) is equipped with rollers (9).

3. Apparatus according to Claim 2, **characterized in that** the axes (10) of the rollers (9) are arranged horizontally and transversely to the longitudinal direction.

4. Apparatus according to one of Claims 1 to 3, **characterized in that** the supporting element (7), as seen in the longitudinal direction, has a length which corresponds at least to the movement distance of the rear displacer group (4).

5. Apparatus according to one of Claims 1 to 4, **characterized in that** the supporting element (7) is connected to a carrying body (13) of the rear displacer group (4).

6. Apparatus according to one of Claims 1 to 5, **characterized in that that** end of the supporting element (7) which is remote from the displacers is arranged at a lower level than that end of the supporting element (7) which is in the vicinity of the displacers.

7. Apparatus according to one of Claims 1 to 6, **characterized in that** the inclination of the supporting element (7) is adjustable.

8. Apparatus according to one of Claims 1 to 7, **characterized in that** the supporting element (7) is connected in a height-adjustable manner to the rear displacer group (4).

9. Apparatus according to one of Claims 1 to 8, **characterized in that** the supporting element (7) is bounded by side surfaces (11).

10. Apparatus according to one of Claims 1 to 9, **characterized in that** it comprises an arrangement (8) for transporting away the tubular packaging sleeve (2).

11. Apparatus according to Claim 10, **characterized in that that** end of the supporting element (7) which is remote from the displacers is arranged above the transporting-away arrangement (8).

12. Apparatus according to Claim 10 or 11, **characterized in that** the transporting-away arrangement is a conveyor belt (8).

13. Apparatus according to Claim 10, **characterized in that** the supporting element (7) is designed as an arrangement for transporting away the tubular packaging sleeve (2).

## Revendications

1. Dispositif destiné à subdiviser en unités de conditionnement un boyau de conditionnement (2) acheminé, comportant deux groupes de refoulement (3, 4) destinés à resserrer le boyau de conditionnement (2), sachant que le groupe de refoulement arrière (4), par référence au mouvement du boyau de conditionnement (2), peut se déplacer dans le sens longitudinal du boyau de conditionnement (2), **caractérisé en ce qu'**il comporte un élément de support (7), assemblé au groupe de refoulement arrière (4) et destiné à supporter le boyau de conditionnement (2).

2. Dispositif selon la revendication 1, **caractérisé en ce que** l'élément de support (7) est équipé de rouleaux (9).

3. Dispositif selon la revendication 2, **caractérisé en ce que** les axes (10) des rouleaux (9) sont disposés horizontalement et transversalement au sens longitudinal.

4. Dispositif selon l'une quelconque des revendications 1 à 3, **caractérisé en ce que** l'élément de support (7) a dans le sens longitudinal une longueur correspondant au moins à la distance de déplacement du groupe de refoulement arrière (4).

5. Dispositif selon l'une quelconque des revendications 1 à 4, **caractérisé en ce que** l'élément de support (7) est relié à un corps de support (13) du groupe de refoulement arrière (4).

6. Dispositif selon l'une quelconque des revendications 1 à 5, **caractérisé en ce que** l'extrémité de l'élément de support (7), éloignée du groupe de refoulement, est agencée plus bas que l'extrémité de l'élément de support (7), proche du groupe de refoulement.

7. Dispositif selon l'une quelconque des revendications 1 à 6, **caractérisé en ce que** l'inclinaison de l'élément de support (7) est réglable.

8. Dispositif selon l'une quelconque des revendications 1 à 7, **caractérisé en ce que** l'élément de support (7) est assemblé au groupe de refoulement arrière (4) de manière réglable en hauteur.

9. Dispositif selon l'une quelconque des revendications 1 à 8, **caractérisé en ce que** l'élément de support (7) est délimité par des faces latérales (11).

10. Dispositif selon l'une quelconque des revendications 1 à 9, **caractérisé en ce qu'**il comporte un dispositif (8) pour évacuer le boyau de conditionnement (2).

11. Dispositif selon la revendication 10, **caractérisé en ce que** l'extrémité de l'élément de support (7), éloignée du groupe de refoulement, est disposée au-dessus du dispositif d'évacuation (8).

12. Dispositif selon la revendication 10 ou 11, **caractérisé en ce que** le dispositif d'évacuation est un tapis roulant (8).

13. Dispositif selon la revendication 10, **caractérisé en ce que** l'élément de support (7) est réalisé sous forme de dispositif d'évacuation du boyau de conditionnement (2).
